# EUROPEAN PATENT APPLICATION

(11) **EP 4 253 939 A1**
(43) Date of publication of application: **04.10.2023**
(21) Application number: 21897653.8
(22) Date of filing: 04.11.2021
(51) Int. Cl.: G01N 21/17, G01N 27/00

(54) **DETECTION METHOD AND DETECTION DEVICE**

(30) Priority: 25.11.2020 JP 2020195383
(71) Applicant: Panasonic Intellectual Property Management Co., Ltd., Osaka-shi, Osaka 540-6207 (JP)
(72) Inventor: HIRAOKA Rui, Chuo-ku, Osaka-shi, Osaka 540-6207 (JP)
(74) Representative: Eisenführ Speiser
(86) International application number: PCT/JP2021/040531
(87) International publication number: WO 2022/113677

(57) **Abstract**

A detection method is a detection method for detecting a target substance from among in-liquid substances including the target substance and a non-target substance, and includes a first step (S11) of applying an alternating-current voltage to an electrode pair (120) that generates an electric field gradient so that positive dielectrophoretic force is exerted on the target substance and the non-target substance; and a second step (S13) of applying an alternating-current voltage after execution of the first step (S11) so that negative dielectrophoretic force is exerted on the target substance on which the positive dielectrophoretic force has been acting.

## Description

### Technical Field

The present disclosure relates to a detection method and a detection apparatus for detecting a target substance.

### Background Art

Conventionally, for example, a detection method for detecting a minute target substance with high sensitivity by using dielectrophoresis is provided. For example, Patent Literature 1 discloses a detection method including a step of applying an alternating-current voltage to a pair of electrodes disposed so as to sandwich a mixed solution and a step of detecting a degree of aggregation of first carrier particles and a degree of aggregation of second carrier particles in the mixed solution while distinguishing the first carrier particles and the second carrier particles that are different in dielectrophoretic characteristics on the basis of a distance from an electrode to a carrier particle and outer appearance of the particle after applying the alternating-current voltage.

### Citation List

### Patent Literature

PTL 1: Japanese Unexamined Patent Application Publication No. 2010-164307

### Summary of Invention

However, the detection method disclosed in Patent Literature 1 has a problem that a concentration of a target substance that can be pulled into an angle of view of an imaging element is low since a distance by which a target substance that is a carrier particle is pulled toward the electrode pair by negative dielectrophoretic force is limited in a detection field where a film thickness is large and therefore accuracy of detection of a target substance that undergoes negative dielectrophoresis is low.

The present disclosure provides a detection method and a detection apparatus that can improve accuracy of detection of a target substance.

A detection method according to an aspect of the present disclosure is a detection method for detecting a target substance from among in-liquid substances including the target substance and a non-target substance, the detection method including a first step of applying an alternating-current voltage to an electrode pair that generates an electric field gradient so that positive dielectrophoretic force is exerted on the target substance and the non-target substance; and a second step of applying an alternating-current voltage after execution of the first step so that negative dielectrophoretic force is exerted on the target substance on which the positive dielectrophoretic force has been acting.

It should be noted that general or specific embodiments may be implemented as a system, an apparatus, an integrated circuit, a computer program, a storage medium, or any selective combination thereof. A computer-readable recording medium encompasses, for example, a non-volatile recording medium such as a compact disc-read only memory (CD-ROM).

The detection method and the like according to the aspect of the present disclosure can improve accuracy of detection of a target substance.

### Brief Description of Drawings

[Fig. 1] Fig. 1 is a configuration diagram of a detection apparatus according to an embodiment.
[Fig. 2] Fig. 2 is a block diagram illustrating a power source unit, a light source, and an imaging element of the detection apparatus according to the embodiment and is a cross-sectional view illustrating a separator.
[Fig. 3] Fig. 3 is a plan view illustrating an electrode pair of the detection apparatus according to the embodiment.
[Fig. 4] Fig. 4 is a flowchart illustrating a detection method or operation of the detection apparatus according to the embodiment.
[Fig. 5] Fig. 5 illustrates electric field intensities in the electrode pair of the detection apparatus.
[Fig. 6] Fig. 6 is a schematic view illustrating a target substance and a non-target substance that move by the detection method according to the embodiment.
[Fig. 7] Fig. 7 illustrates a change of dielectrophoretic force according to the embodiment.
[Fig. 8] Fig. 8 illustrates a change of dielectrophoretic force in a case of first permittivity and a change of dielectrophoretic force in a case of second permittivity according to the embodiment.
[Fig. 9] Fig. 9 illustrates a result of simulation in which a target substance that moved was detected by the detection method.

### Description of Embodiments

An embodiment is specifically described below with reference to the drawings. Note that the embodiment described below illustrates a general or specific example. Numerical values, shapes, materials, constituent elements, positions of the constituent elements, and ways in which the constituent elements are connected, steps, an order of steps, and the like in the embodiment below are merely examples and are not intended to limit the scope of the claims. The drawings are not necessarily strict illustration. In the drawings, substantially identical constituent elements are given identical reference signs, and repeated description thereof is sometimes omitted or simplified.

Note that the drawings are schematic views and are not necessarily strict illustration. In the drawings, substantially identical constituent elements are given identical reference signs, and repeated description thereof is sometimes omitted or simplified.

Note that in the following description, terms such as parallel expressing a relationship between elements, terms such as a comb shape expressing a shape of an element, and numerical ranges are not limited to strict meaning and encompasses substantially equivalent ranges, for example, a difference of approximately several %.

Note that in the following description, detecting a target substance encompasses measuring an amount of the target substance (e.g., the number of target substances, a concentration of the target substance, or the like) or a range thereof in addition to finding out the target substance and confirming the presence of the target substance.

### (Embodiment)

### <Configuration: Detection Apparatus 100>

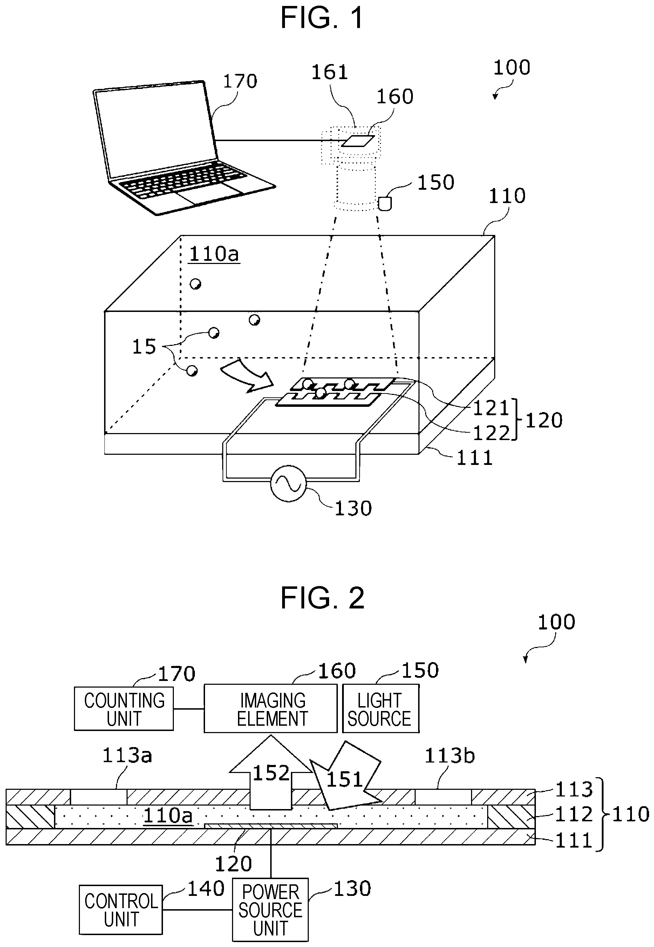

Fig. 1 is a configuration diagram of a detection apparatus 100 according to an embodiment.

As illustrated in Fig. 1, the detection apparatus 100 detects a target substance from among in-liquid substances in a solvent used as a sample that include the target substance and a non-target substance and measures the target substance. Specifically, a complex and unbound particles included in the in-liquid substances are separated by dielectrophoresis (DEP), and a target substance included in the separated complex precipitates out on a surface of an electrode pair 120, and the detection apparatus 100 detects the target substance that has precipitated. The dielectrophoresis is a phenomenon in which dielectric particles exposed in an uneven alternating electric field (electric field gradient) are polarized by this electric field and thereby migrate toward a side where an electric field intensity is strong or toward a side where an electric field intensity is weak. This force does not require charging of dielectric particles. That is, the dielectrophoresis moves dielectric particles to a predetermined position and thereby concentrates (aggregates) the dielectric particles at the predetermined position. Therefore, in a case where the in-liquid substances include a large number of dielectric particles, the large number of dielectric particles are gathered at the predetermined position and concentrated three-dimensionally by the detection apparatus 100. Note that in the present embodiment, the target substance and the non-target substance are sometimes collectively referred to as particles 15.

The complex as used herein is a bound body in which the target substance and a dielectric particle modified with a substance having a property of specifically binding to the target substance are bound. That is, in the complex, the target substance and the dielectric particle are bound with the substance having a property of specifically binding to the target substance interposed therebetween.

The substance (hereinafter referred to as a specifically binding substance) having a property of specifically binding to the target substance is a substance that can specifically bind to the target substance. Examples of a combination of the specifically binding material with the target substance include a combination of an antibody with an antigen, a combination of an enzyme with a substrate or a coenzyme, a combination of a receptor with a hormone, a combination or protein A or protein G with an antibody, a combination of avidin with biotin, a combination of calmodulin with calcium, and a combination of lectin with sugar.

The unbound particles are dielectric particles that have not formed a complex. That is, the unbound particles are dielectric particles that have not been bound to the target substance. The unbound particles are also called a free (F) component. On the other hand, the dielectric particle included in the complex is also called a bound (B) component.

The target substance is a substance to be detected by the detection apparatus 100, and examples of the target substance include molecules such as a pathogenicity protein, viruses (e.g., coat protein), and bacteria (e.g., polysaccharide). The target substance is sometimes called a substance to be detected or a detection target substance. The non-target substance is a substance that precipitates out on the surface of the electrode pair 120 but is not a target to be detected by the detection apparatus 100, that is, a substance other than the target substance.

The dielectric particles are particles that can be polarized by an applied electric field. The dielectric particles are, for example, particles containing a fluorescent substance. Note that the dielectric particles are not limited to the particles containing a fluorescent substance. For example, the dielectric particles may be polystyrene particles containing no fluorescent substance.

Fig. 2 is a block diagram illustrating a power source unit 130, a light source 150, and an imaging element 160 of the detection apparatus 100 according to the embodiment and is a cross-sectional view illustrating a separator 110. As illustrated in Fig. 2, the detection apparatus 100 includes the separator 110, the electrode pair 120, the power source unit 130, a control unit 140, the light source 150, the imaging element 160, and a counting unit 170.

### [Separator 110]

The separator 110 separates the complex and the unbound particles in the solvent by dielectrophoresis. The separator 110 separates the complex and the unbound particles in position.

The separator 110 is a container that forms a flow passage 110a serving as a space where the solvent containing the particles 15, which are the target substance and the non-target substance, flows. The flow passage 110a can also store the solvent therein. In the present embodiment, the flow passage 110a is filled with the solvent.

The separator 110 includes a first substrate 111, a spacer 112, and a second substrate 113.

The first substrate 111 faces the second substrate 113 apart from the second substrate 113 so that the flow passage 110a is provided, and overlaps the second substrate 113 in parallel with the second substrate 113. The electrode pair 120 to which an alternating-current voltage is applied by the power source unit 130 is disposed on an upper surface of the first substrate 111, which is a surface facing the second substrate 113. The first substrate 111 is, for example, a sheet made of glass or resin.

The spacer 112 is disposed on the upper surface of the first substrate 111 and on a lower surface of the second substrate 113 and is sandwiched between the first substrate 111 and the second substrate 113. That is, the spacer 112 forms the flow passage 110a between the first substrate 111 and the second substrate 113. Note that the spacer 112 may have a through hole. The flow passage 110a through which the solvent flows may be formed by the through hole sandwiched between the first substrate 111 and the second substrate 113. The solvent that can contain the complex and the unbound particles may be introduced into the flow passage 110a through the through hole.

The second substrate 113 is disposed on an upper surface of the spacer 112 so as to overlap the first substrate 111 and the spacer 112. The second substrate 113 has a supply hole 113a and a discharge hole 113b that lead to the flow passage 110a. The supply hole 113a is a hole for supplying the solvent into the flow passage 110a. The discharge hole 113b is a hole for discharging the solvent in the flow passage 110a by supply of the solvent from the supply hole 113a into the flow passage 110a. That is, the solvent is supplied into the flow passage 110a through the supply hole 113a and is discharged from the flow passage 110a through the discharge hole 113b.

The second substrate 113 is, for example, a transparent sheet made of glass or resin. For example, the second substrate 113 may be a polycarbonate substrate.

Note that in the present embodiment, the separator 110 need not include the second substrate 113. That is, an accommodating unit may be provided without the second substrate 113. That is, the second substrate 113 is not an essential constituent element of the separator 110.

### [Electrode Pair 120]

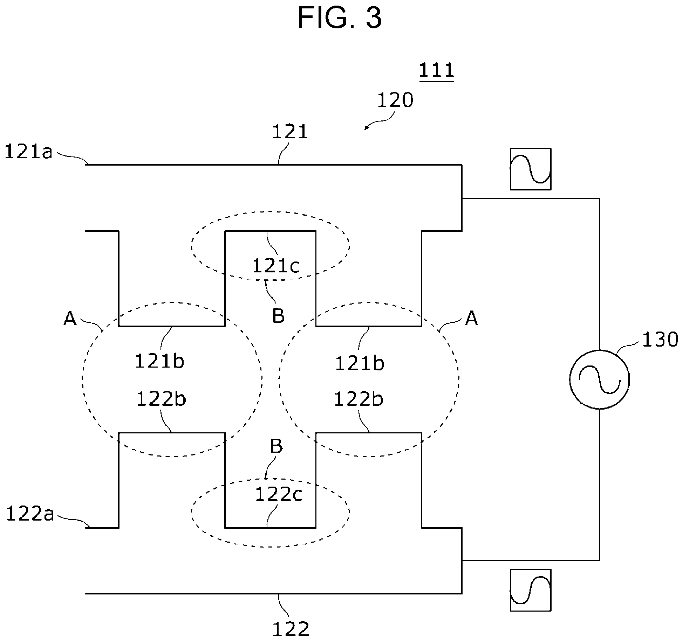

Fig. 3 is a plan view illustrating the electrode pair 120 of the detection apparatus 100 according to the embodiment.

As illustrated in Figs. 2 and 3, the electrode pair 120 is electrically connected to the power source unit 130. Specifically, a first electrode 121 of the electrode pair 120 and a second electrode 122 of the electrode pair 120 are each electrically connected to the power source unit 130. The electrode pair 120 generates an electric field gradient, which is an uneven electric field, on the first substrate 111 by an alternating-current voltage applied by the power source unit 130. An alternating-current voltage applied to the first electrode 121 and an alternating-current voltage applied to the second electrode 122 may be substantially identical to each other or there may be a phase difference between the alternating-current voltages. The phase difference between the alternating-current voltages may be, for example, 180 degrees.

As illustrated in Fig. 3, the electrode pair 120 has the first electrode 121 and the second electrode 122 that are disposed on the upper surface of the first substrate 111.

The first electrode 121 has a comb shape in plan view and is disposed so as to face the second electrode 122. Specifically, the first electrode 121 has a base part 121a that extends in a first direction (the lateral direction in Fig. 3) and protruding parts 121b that protrude from the base part 121a in a second direction (the longitudinal direction in Fig. 3) that crosses the first direction. A recessed part 121c is provided between adjacent two protruding parts 121b among the protruding parts 121b. Lengths of the protruding parts 121b and the recessed part 121c in the first direction and lengths of the protruding parts 121b and the recessed part 121c in the second direction are each, for example, approximately 5 micrometers.

The second electrode 122 also has a similar shape to the first electrode 121 and has a comb shape in plan view. That is, the shape and size of the second electrode 122 are substantially identical to the shape and size of the first electrode 121. Specifically, the second electrode 122 also includes a base part 122a that extends in the first direction (the lateral direction in Fig. 3) and protruding parts 122b that protrude from the base part 122a in the second direction (the longitudinal direction in Fig. 3) that crosses the first direction. A recessed part 122c is provided between adjacent two protruding parts 122b among the protruding parts 122b. The protruding parts 122b of the second electrode 122 face the protruding parts 121b of the first electrode 121 so that the protruding parts 122b and the protruding parts 121b are located close to each other.

Note that the position of the electrode pair 120 is not limited to the upper surface of the first substrate 111. For example, the electrode pair 120 need just be disposed close to the solvent. Being close to the solvent means that the electrode pair 120 is disposed in such a range that an electric field gradient generated by the electrode pair 120 can be generated in the solvent.

Note that the electrode pair 120 is not limited to the present embodiment. The electrode pair 120 may be, for example, castellated electrodes or an electrode pair, such as polynomial, that generates positive and negative electric field regions three-dimensionally. The electrode pair 120 may have three or more electrodes.

### [Power Source Unit 130]

The power source unit 130 applies an alternating-current voltage to the electrode pair 120. Specifically, the power source unit 130 is an alternating-current power source and applies an alternating-current voltage to each of the first electrode 121 and the second electrode 122. The power source unit 130 may provide a phase difference between an alternating-current voltage applied to the first electrode 121 and an alternating-current voltage applied to the second electrode 122 so that an electric field gradient is generated in the solvent on the upper surface of the first substrate 111.

Note that the power source unit 130 may be any power source that can supply an alternating-current voltage and is not limited to the above power source unit 130. The power source unit 130 may have a function of changing a frequency of an alternating-current voltage supplied from an external power source. Note that the power source unit 130 is not limited to the present embodiment in particular, and can be one based on any of other known techniques.

### [Control Unit 140]

The control unit 140 controls an alternating-current voltage applied to the electrode pair 120 by controlling the power source unit 130. Specifically, the control unit 140 changes an electric field region generated by the electrode pair 120 by transmitting a control signal to the power source unit 130 and thereby controlling the power source unit 130. For example, the control unit 140 controls the power source unit 130 so that a positive electric field region is generated by the electrode pair 120 or controls the power source unit 130 so that a negative electric field region is generated by the electrode pair 120. More specifically, the control unit 140 controls the power source unit 130 to apply an alternating-current voltage to the electrode pair 120. This generates a positive electric field region that exerts dielectrophoretic force on the target substance and the non-target substance that precipitate out on the surface of the electrode pair 120. Subsequently, the control unit 140 controls the power source unit 130 to apply, to the electrode pair 120, an alternating-current voltage of a frequency different from a frequency of the alternating-current voltage applied to generate the positive electric field region after elapse of a certain period from the generation of the positive electric field region. This generates a negative electric field region that exerts dielectrophoretic force on the target substance. That is, the control unit 140 controls the power source unit 130 to apply an alternating-current voltage of a first frequency to the electrode pair 120 to generate a positive electric field region between the electrode pair 120. The control unit 140 controls the power source unit 130 to apply an alternating-current voltage of a second frequency to the electrode pair 120 to generate a negative electric field region between the electrode pair 120.

To generate a positive electric field region without generating a negative electric field region at a time t1 and concurrently generate both of a positive electric field region and a negative electric field region at a time t2, the control unit 140 makes a frequency of an alternating-current voltage applied to the electrode pair 120 at the time t1 and a frequency of an alternating-current voltage applied to the electrode pair 120 at the time t2 different from each other. This will be described later in detail. For example, when the control unit 140 controls the power source unit 130 to apply the alternating-current voltage of the first frequency to the electrode pair 120, a positive electric field region is generated, which exerts positive dielectrophoretic force on the target substance and the non-target substance. When the control unit 140 controls the power source unit 130 to apply the alternating-current voltage of the second frequency to the electrode pair 120, a positive electric field region is generated, which exerts positive dielectrophoretic force on the non-target substance, and a negative electric field region is generated, which exerts negative dielectrophoretic force on the target substance.

Note that the control unit 140 may cause the power source unit 130 to perform control of switching ON and OFF of alternating-current voltages applied to the first electrode 121 and the second electrode 122 of the electrode pair 120 so that ON/OFF of the alternating-current voltage applied to the first electrode 121 and ON/OFF of the alternating-current voltage applied to the second electrode 122 are different from each other.

### [Light Source 150]

The light source 150 irradiates the solvent in the flow passage 110a with excitation light 151. In this way, the dielectric particles in the solvent are irradiated with the excitation light 151. For example, in a case where the dielectric particles contain a fluorescent substance, the fluorescent substance is excited by the excitation light 151, and fluorescence 152 is emitted as detection light from the fluorescent substance.

The light source 150 can be, for example, a laser such as a semiconductor laser or a gas laser. The excitation light 151 emitted from the light source 150 may have a wavelength (e.g., 400 nm to 2000 nm) that less interacts with a substance contained in a virus. The excitation light 151 may have a wavelength (e.g., 600 nm to 850 nm) that can be used by a semiconductor laser. Note that the light source 150 is not limited to the present embodiment in particular, and can be one based on any of other known techniques.

Note that the light source 150 need not be included in the detection apparatus 100. For example, in a case where dielectric particles are large, a fluorescence substance need not be contained in the dielectric particles, and in this case, the dielectric particles need not be irradiated with excitation light.

### [Imaging Element 160]

The imaging element 160 generates an image including the target substance and the non-target substance by detecting detection light 132, which is the irradiation light 131 from the light source 150 reflected by the target substance and the non-target substance in the solvent. Specifically, the imaging element 160 is disposed above the second substrate 113 and generates an image including the target substance and the non-target substance by imaging portions such as the protruding parts 121b and the recessed part 121c of the electrode pair 120. In a case where the target substance and the non-target substance are present in the imaged portions, detection light generated by the irradiation light 131 from the light source 150 enters the imaging element 160, and therefore the target substance and the non-target substance can be detected. The imaging element 160 is, for example, an image sensor such as a CMOS image sensor or a CCD image sensor included in an imaging device 161. The imaging element 160 outputs the generated image to the counting unit 170.

Note that the detection apparatus 100 may include a photodetector as the imaging element 160 instead of an image sensor. In this case, the photodetector may detect detection light from a region where the target substance and the non-target substance are gathered by dielectrophoresis on the first substrate 111.

Note that the detection apparatus 100 may include an optical lens and/or an optical filter between the light source 150 and the separator 110 and/or between the separator 110 and the imaging element 160. For example, a long pass filter that can block the excitation light 151 emitted from the light source 150 and allows the fluorescence 152 emitted from the fluorescence substance to pass therethrough may be provided between the separator 110 and the imaging element 160.

### [Counting Unit 170]

The counting unit 170 acquires an image output by the imaging element 160 and counts the number of target substances contained in the solvent on the basis of the image. For example, the counting unit 170 detects a bright point having a different luminance value by comparison between the acquired image and a reference image taken in advance that does not include the target substance and the non-target substance. Specifically, in a case where the detection light 132 is detected, a portion of a high luminance value in the acquired image as compared with the reference image is detected as a bright point, and in a case where transmitted light or scattered light is detected as the detection light 132, a point of a low luminance value in the acquired image as compared with the reference image is detected as a bright point. In this way, a result of counting of the target substance in the solvent can be obtained.

Note that the counting unit 170 is, for example, realized by execution of a program for the image analysis by using a circuit such as a processor and a storage device such as a memory. Note that the counting unit 170 may be realized by a dedicated circuit.

### [Distribution of Electric Field Intensities on First Substrate 111]

A distribution of electric field intensities of an electric field gradient generated on the first substrate 111 is described with reference to Fig. 3.

As illustrated in Fig. 3, first electric field regions A (indicated by the broken line) having a high electric field intensity relative to a reference electric field intensity and second electric field regions B (indicated by the broken line) having a low electric field intensity relative to the reference electric field intensity are formed on the first substrate 111 as regions having an electric field gradient. The first electric field regions A are regions having a higher electric field intensity than the second electric field regions B and are regions between the protruding parts 121b and the protruding parts 122b that face each other. The second electric field regions B are regions having a lower electric field intensity than the first electric field regions A and are regions at a bottom of the recessed part 121c and a bottom of the recessed part 122c (at a root of the protruding parts 121b that is located on a base part 121a side).

Since the electric field gradient is generated on the first substrate 111 by the electrode pair 120, the target substance and the non-target substance in the solvent exposed to the electric field gradient are gathered and concentrated at a predetermined position by dielectrophoretic force. The position where the target substance and the non-target substance are gathered and concentrated varies depending on whether positive dielectrophoretic force acts on the target substance and the non-target substance or negative dielectrophoretic force acts on the target substance and the non-target substance when the electric field gradient is formed.

Specifically, in a case where positive dielectrophoresis acts on the target substance and the non-target substance, the target substance and the non-target substance move to and are gathered and concentrated in a region having a high electric field intensity. The region having a high electric field intensity is the first electric field regions A including a position where a distance between the first electrode 121 and the second electrode 122 is shortest due to the protruding parts 121b and the protruding parts 122b. That is, the target substance and the non-target substance on which positive dielectrophoretic force acts are gathered and concentrated in the first electric field regions A since the first electric field regions A are regions between the protruding parts 121b and the protruding parts 122b and an electric field intensity is higher at a position closer to the first electric field regions A.

On the other hand, in a case where negative dielectrophoretic force acts, the target substance among the substances including the target substance and the non-target substance moves to and is gathered and concentrated in a region having a low electric field intensity. The region having a low electric field intensity is the second electric field regions B including a position where the distance between the first electrode 121 and the second electrode 122 is largest due to the recessed part 121c and the recessed part 122c. That is, the target substance on which negative dielectrophoretic force acts is gathered and concentrated in the second electric field regions B since the second electric field regions B are regions in the recessed part 121c and the recessed part 122c and an electric field intensity is lower at a position farther from the first electric field regions A.

### < Operation >

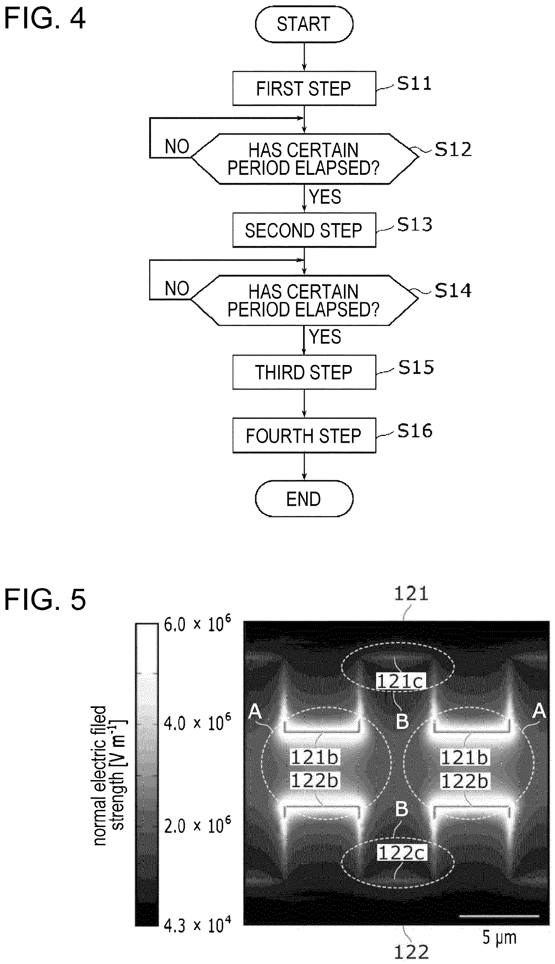

A method for detecting a target substance by using the detection apparatus 100 configured as above is described with reference to Figs. 4 to 6. The detection method is a method for detecting the target substance from among in-liquid substances including the target substance and the non-target substance.

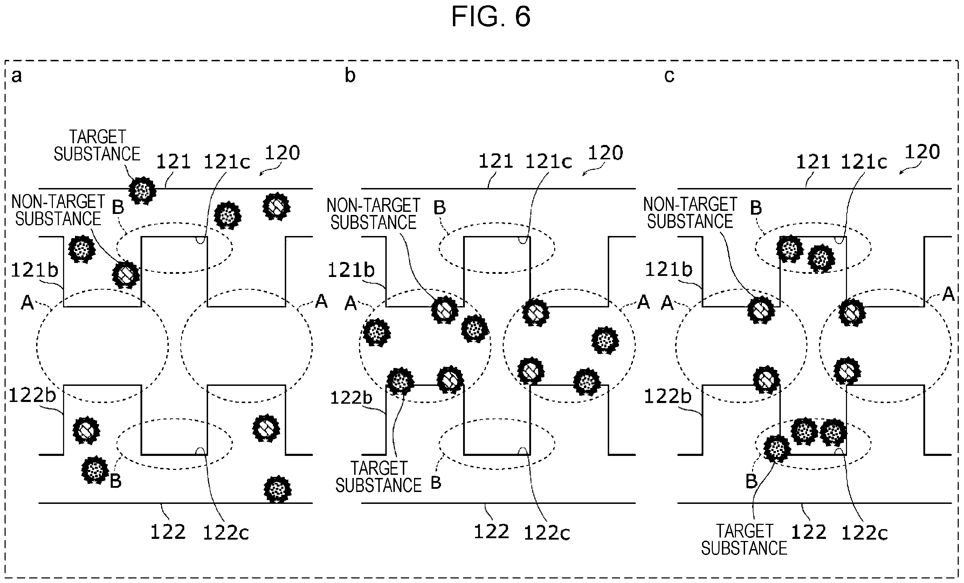

Fig. 4 is a flowchart illustrating a detection method according to the embodiment or operation of the detection apparatus 100. Fig. 5 illustrates electric field intensities in the electrode pair of the detection apparatus. Fig. 6 is a schematic view illustrating the target substance and the non-target substance that move by the detection method according to the embodiment, a of Fig. 6 illustrates the target substance and the non-target substance before application of an alternating-current voltage to the electrode pair 120. b of Fig. 6 illustrates the target substance and the non-target substance in a state where a positive electric field region is generated in the first electric field regions A by applying an alternating-current voltage to the electrode pair 120. c of Fig. 6 illustrates the target substance and the non-target substance in a state where a negative electric field region is generated in the second electric field regions B by further generating a negative electric field region around the electrode pair 120.

First, as illustrated in Fig. 4, a of Fig. 6, and b of Fig. 6, the control unit 140 controls the power source unit 130 to apply an alternating-current voltage of a first frequency to the electrode pair 120, so that a positive electric field region is generated (first step: S11). For example, as illustrated in Fig. 5, an electric field region having a high electric field intensity is generated at a tip side of each of the protruding parts 121b and the protruding parts 122b of the electrode pair 120. In this way, in first step S11, the alternating-current voltage of the first frequency is applied to the electrode pair 120, and thereby positive dielectrophoretic force is exerted on the target substance and the non-target substance. As illustrated in b of Fig. 6, a positive electric field region is generated around the electrode pair 120, and therefore the target substance and the non-target substance are gathered and concentrated in the first electric field regions A due to positive dielectrophoretic force.

The control unit 140 determines whether or not a certain period has elapsed from the start of execution of first step S 11 (S12). In a case where the certain period has not elapsed from the start of execution of first step S 11 (NO in S12), the control unit 140 repeats the process in step S12. In a case where the certain period has elapsed from the start of execution of first step S 11 (YES in S12), the control unit 140 controls the power source unit 130 to apply an alternating-current voltage of a frequency different from the frequency of the alternating-current voltage in the first step to the electrode pair 120, so that a negative electric field region is generated that exerts dielectrophoretic force on the target substance (second step: S13). That is, in second step S13, an alternating-current voltage of a second frequency different from the first frequency of the alternating-current voltage applied in first step S11 is applied to the electrode pair 120, and thereby a negative electric field region is generated. In the second step, negative dielectrophoretic force is more strongly exerted on the target substance than positive dielectrophoretic force that acts on the target substance. As a result, in second step S13, negative dielectrophoretic force is exerted on the target substance, and positive dielectrophoretic force is exerted on the non-target substance. The second frequency is higher than the first frequency.

As illustrated in c of Fig. 6, not only a positive electric field region, but also a negative electric field region is generated around the electrode pair 120, and therefore the non-target substance is gathered and concentrated in the first electric field regions A by positive dielectrophoretic force, and the target substance is gathered and concentrated in the second electric field regions B by negative dielectrophoretic force.

The control unit 140 determines whether or not a certain period has elapsed from the start of execution of second step S13 (S14). In a case where the certain period has not elapsed from the start of execution of second step S 13 (NO in S14), the control unit 140 repeats the process in step S14. In a case where the certain period has elapsed from the start of execution of second step S13 (YES in S14), the imaging element 160 takes an image including the target substance by receiving the detection light 132 (third step: S15). That is, the imaging device 161 takes an image during execution of the second step. Note that the image taken in third step S15 is an image in which the non-target substance is concentrated in the first electric field regions A and the target substance is concentrated in the second electric field regions B. The imaging element 160 outputs the taken image to the counting unit 170.

The counting unit 170 acquires the image taken in third step S15 from the imaging element 160 and counts the number of target substances included in the image (fourth step: S16). That is, the counting unit 170 counts the number of target substances in the solvent by performing image analysis on the image. In this way, the detection apparatus 100 can count the number of target substances.

### <Movement of Target Substance and Non-Target Substance>

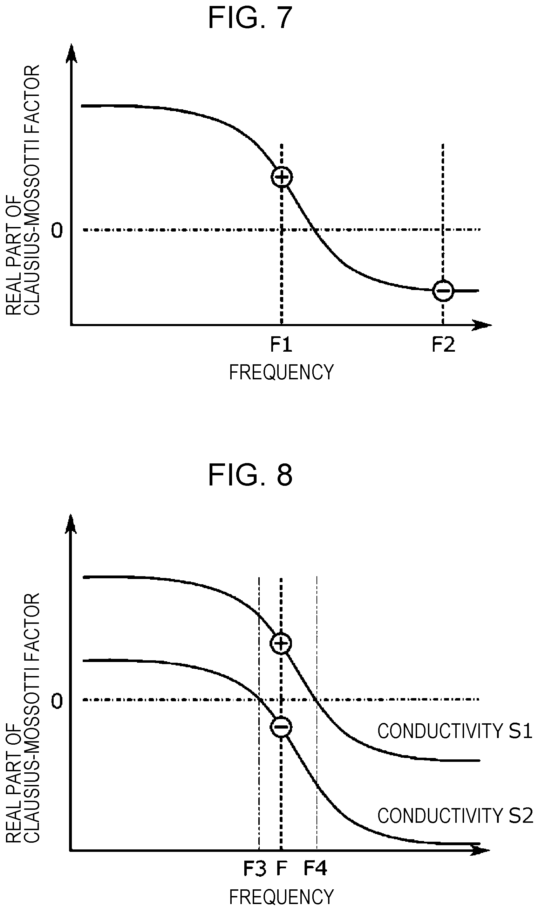

As described above, the detection method and detection apparatus according to the present embodiment switches a direction of dielectrophoretic force acting on any one of the target substance and the non-target substance by changing dielectrophoretic force acting on the target substance, that is, by generating both of positive dielectrophoretic force and negative dielectrophoretic force after generating positive dielectrophoretic force. The following describes a case where a direction of dielectrophoretic force acting on the target substance is switched with reference to Figs. 7 and 8.

Fig. 7 illustrates a change of dielectrophoretic force according to the embodiment. Fig. 8 illustrates a change of dielectrophoretic force in a case of first permittivity and a change of dielectrophoretic force in a case of second permittivity according to the embodiment.

It is known that whether positive dielectrophoretic force acts on the target substance and the non-target substance or negative dielectrophoretic force acts on the target substance and the non-target substance has relevance with the target substance and the non-target substance and a property of the solvent in which an electric field is formed. The relevance with the target substance and the non-target substance and the property of the solvent in which an electric field is formed is, for example, evaluated by the real part of the Clausius-Mossotti factor.

As illustrated in Fig. 7, the vertical axis represents the real part of the Clausius-Mossotti factor, and the horizontal axis represents a frequency of an alternating-current voltage applied between the electrode pair 120.

In a case where the real part of the Clausius-Mossotti factor is positive, positive dielectrophoretic force acts on particles such as the target substance and the non-target substance, and the particles such as the target substance and the non-target substance move to a region having a higher electric field intensity. Conversely, in a case where the real part of the Clausius-Mossotti factor is negative, negative dielectrophoretic force acts on the particles such as the target substance and the non-target substance, and the particles such as the target substance and the non-target substance move to a region having a lower electric field intensity.

As illustrated in Fig. 7, for example, the real part of the Clausius-Mossotti factor has a positive value at an alternating-current voltage of a first frequency (e.g., F1) included in a low frequency region. The real part of the Clausius-Mossotti factor has a negative value at an alternating-current voltage of a second frequency (e.g., F2) included in a high frequency region. Therefore, dielectrophoretic force acting on the target substance and the non-target substance can be switched between positive and negative, for example, by changing the frequency of the alternating-current voltage applied between the electrode pair 120.

As illustrated in Fig. 8, the real part of the Clausius-Mossotti factor depends on sizes of the target substance and the non-target substance and the frequency of the alternating-current voltage. At a frequency F of the alternating-current voltage, the real part of the Clausius-Mossotti factor is negative as for particles of first conductivity S1, and the real part of the Clausius-Mossotti factor is positive as for particles of second conductivity S2. Therefore, by setting the frequency F as a predetermined frequency of the alternating-current voltage, negative dielectrophoresis can be exerted on the target substance, and positive dielectrophoresis can be exerted on the non-target substance.

Specifically, the control unit 140 controls the power source unit 130 to apply, between the electrode pair 120, an alternating-current voltage of a first frequency at which the real part of the Clausius-Mossotti factor has a positive value in order to exert positive dielectrophoretic force. The first frequency is lower than a frequency F3, as illustrated in Fig. 8. The first frequency at which the real part of the Clausius-Mossotti factor has a positive value is a frequency that can exert positive dielectrophoretic force on the target substance and the non-target substance. As a result, the electrode pair 120 generates a positive electric field region, and the target substance and the non-target substance are gathered and concentrated in the first electric field regions A having a high electric field intensity by positive dielectrophoretic force.

Then, the control unit 140 controls the power source unit 130 to apply, between the electrode pair 120, an alternating-current voltage of a second frequency at which the real part of the Clausius-Mossotti factor takes two kinds of values, that is, a positive value and a negative value in order to exert negative dielectrophoretic force on the target substance. The second frequency is higher than the frequency F3 and is lower than a frequency F4, as illustrated in Fig. 8. The second frequency at which the real part of the Clausius-Mossotti factor has a negative value is a frequency that can exert negative dielectrophoretic force on the non-target substance while allowing positive dielectrophoretic force to act on the target substance. Since the electrode pair 120 generates a positive electric field region and a negative electric field region, the target substance is gathered and concentrated in the second electric field regions B having a high electric field intensity by negative dielectrophoretic force, and the non-target substance is kept gathered and concentrated in the first electric field regions A having a high electric field intensity by positive dielectrophoretic force. Note that the positive dielectrophoretic force and the negative dielectrophoretic force may be interchanged with each other.

To change the frequency as described above, the control unit 140 changes the frequency of the alternating-current voltage applied to the electrode pair 120 by controlling the power source unit 130.

### <Simulation Result>

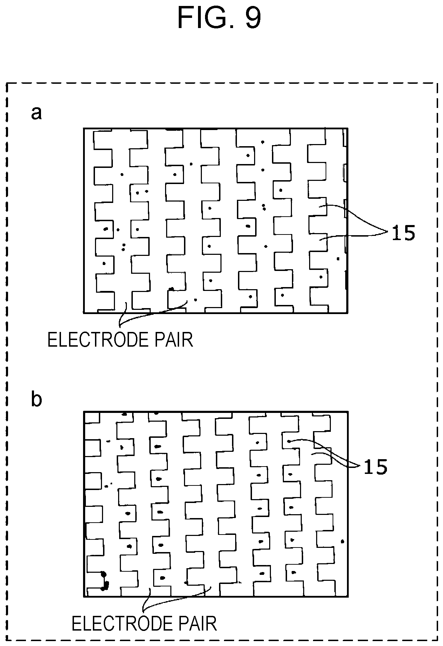

A result of simulation using a method for detecting a target substance by using a detection apparatus is described with reference to Fig. 9. Fig. 9 illustrates a result of simulation in which a target substance that moved was detected by a detection method. a of Fig. 9 illustrates the target substance (the black spots) detected around an electrode pair when only the second step was performed. b of Fig. 9 illustrates the target substance (the black spots) detected around the electrode pair when the first step and the second step of the present embodiment were performed. The behavior of the particles 15 was analyzed by simulation by using this detection method.

In the simulation result, pure water having conductivity of 1 uS/cm was used as a solvent. Polystyrene having a particle diameter of 1 µm was used as model particles, which are an example of the particles 15 that are the target substance. A width of the electrode pair was 20 µm, and a distance between the first electrode and the second electrode was 20 µm. A power source unit applied an alternating-current voltage having a potential difference of 20 V, a frequency of 1 MHz, and a phase of 0° to a first electrode. The power source unit applied an alternating-current voltage having a potential difference of 20 V, a frequency of 1 MHz, and a phase of 180° to a second electrode.

The number of target substances detected when only the second step was performed as Example was counted. In this case, as illustrated in a of Fig. 9, the average number of particles gathered in each second electric field region B was 406.2.

The number of target substances detected when the first step and the second step of the present embodiment were performed was counted. In this case, as illustrated in b of Fig. 9, the average number of particles gathered in each second electric field region B was 2193.2.

It was thus confirmed that the target substance can be gathered and concentrated in the second electric field regions B according to this detection method.

### <Operation and Effects>

Operation and effects of the detection method according to the embodiment and the detection apparatus 100 are described.

As described above, the detection method according to the present embodiment is a detection method for detecting a target substance from among in-liquid substances including the target substance and a non-target substance, and includes a first step of applying an alternating-current voltage to an electrode pair 120 that generates an electric field gradient so that positive dielectrophoretic force is exerted on the target substance and the non-target substance; and a second step of applying an alternating-current voltage after execution of the first step so that negative dielectrophoretic force is exerted on the target substance on which the positive dielectrophoretic force has been acting.

With this arrangement, in the first step, the positive dielectrophoretic force is exerted on the target substance and the non-target substance that precipitate out on the surface of the electrode pair 120, and thereby the target substance and the non-target substance can be gathered and concentrated. In the second step, dielectrophoretic force exerted on the target substance is switched from the positive dielectrophoretic force to negative dielectrophoretic force by applying an alternating-current voltage after execution of the first step, and therefore the negative dielectrophoretic force can be exerted on the target substance. This can move the target substance from a place where the non-target substance is gathered, thereby allowing the target substance to be gathered and concentrated in a place different from the place where the non-target substance is gathered.

Therefore, according to this detection method, it is possible to improve accuracy of detection of the target substance.

The detection apparatus 100 according to the present embodiment is a detection apparatus 100 for detecting a target substance from among in-liquid substances including the target substance and a non-target substance, and includes an electrode pair 120 that generates an electric field gradient; a power source unit 130 that applies an alternating-current voltage to the electrode pair 120; and a control unit 140 that controls the power source unit 130 to apply the alternating-current voltage to the electrode pair 120 so that a positive electric field region is generated for the target substance and the non-target substance and then apply an alternating-current voltage so that negative dielectrophoretic force is exerted on the target substance on which positive dielectrophoretic force has been acting.

The detection apparatus 100 also produces operation and effects similar to those described above.

In the detection method according to the present embodiment, in the second step, the negative dielectrophoretic force is generated on the target substance by applying, to the electrode pair 120, an alternating-current voltage of a frequency different from a frequency of the alternating-current voltage applied in the first step.

With this arrangement, dielectrophoretic force exerted on the target substance the non-target substance can be switched between positive and negative. That is, negative dielectrophoretic force can be exerted on the non-target substance while allowing positive dielectrophoretic force to act on the target substance. This can gather the target substance in a place different from a place where the non-target substance is gathered, thereby further improving accuracy of detection of the target substance.

In the detection method according to the present embodiment, in the first step, the positive dielectrophoretic force is exerted on the target substance and the non-target substance by applying an alternating-current voltage of a first frequency to the electrode pair 120. In the second step, the negative dielectrophoretic force is exerted on the target substance and the positive dielectrophoretic force is exerted on the non-target substance by applying an alternating-current voltage of a second frequency different from the first frequency to the electrode pair 120.

With this arrangement, whether positive dielectrophoretic force is exerted or negative dielectrophoretic force is exerted can be adjusted by the frequency of the alternating-current voltage applied between the electrode pair 120. By thus adjusting the frequency, a direction of dielectrophoretic force can be changed from positive dielectrophoretic force to negative dielectrophoretic force. This can gather the target substance in a place different from a place where the non-target substance is gathered, thereby further improving accuracy of detection of the target substance.

In the detection method according to the present embodiment, the second frequency is higher than the first frequency.

With this arrangement, in which the second frequency is higher than the first frequency, positive dielectrophoretic force can be exerted on the target substance, and negative dielectrophoretic force can be exerted on the non-target substance.

In the detection method according to the present embodiment, in the second step, the negative dielectrophoretic force is more strongly exerted on the target substance than the positive dielectrophoretic force acting on the target substance.

With this arrangement, the target substance can be gathered in a place different from a place where the non-target substance is gathered by separating a group of the target substance and a group of the non-target substance in the second step, and it is therefore possible to further improve accuracy of detection of the target substance.

The detection method according to the present embodiment further includes a third step of taking an image including the target substance during execution of the second step; and a fourth step of measuring the number of target substances included in the image taken in the third step.

With this arrangement, the number of target substances can be measured by taking an image including the target substance, and it is therefore possible to accurately count the number of target substances.

### (Modifications and Others)

The present disclosure has been described above on the basis of the embodiment, but the present disclosure is not limited to the embodiment and the like.

For example, in the detection method and the detection apparatus according to the present embodiment, dielectrophoretic force may be switched between positive and negative, for example, by changing conductivity in an environment around the target substance and the non-target substance. To change the conductivity, for example, to increase the conductivity, an ion-containing solution, potassium chloride, or the like may be added to the solvent. The ion-containing solution, potassium chloride, or the like may be added by using an adding device. The adding device can increase conductivity in the environment around the target substance and the non-target substance. For example, in the detection method according to the present embodiment, in the second step, conductivity of a solvent containing the in-liquid substances may be increased. With this arrangement, dielectrophoretic force can be switched between positive and negative by increasing the conductivity of the solvent. That is, negative dielectrophoretic force can be exerted on the non-target substance while allowing positive dielectrophoretic force to act on the target substance. This can gather the target substance in a place different from a place where the non-target substance is gathered, thereby further improving accuracy of detection of the target substance.

Although the electrode pair on the first substrate is illustrated in Fig. 3 in the detection method and the detection apparatus according to the present embodiment, the shape of the electrode pair and a way in which the electrode pair is disposed are not limited to those illustrated in Fig. 3. For example, the electrode pair may be configured such that a protruding part of a first electrode and a protruding part of a second electrode are deviated from each other in the second direction. The protruding part of the first electrode may face a recessed part of the second electrode, and the protruding part of the second electrode may face a recessed part of the first electrode. Even such an electrode pair can generate an electric field gradient upon application of an alternating-current voltage.

In the detection method and the detection apparatus according to the present embodiment, the number of electrodes included in the electrode pair is not limited to two and may be three or more. For example, the electrode pair includes three or more electrodes, and there is a phase difference between alternating-current voltages applied to adjacent electrodes.

Processing units included in the detection method, the detection apparatus, and the like according to the present embodiment are typically realized as an LSI, which is an integrated circuit. Each of these processing units may be realized in one chip or some of all of the processing units may be integrated into one chip.

Integration is not limited to the LSI and may be realized by a dedicated circuit or a general-purpose processor. A Field Programmable Gate Array (FPGA) that can be programmed after manufacturing an LSI or a reconfigurable processor that allows reconfiguration of the connection or setup of circuit cells inside the LSI can also be used.

In the embodiment, each of the constituent elements may be realized by dedicated hardware or may be realized by execution of a software program suitable for the constituent element. Each of the constituent elements may be realized by reading out and executing a software program recorded in a storage medium such as a hard disk or a semiconductor memory by a program executing unit such as a CPU or a processor.

All numerals used in the above description are merely examples for specifically describing the present disclosure, and the embodiment of the present disclosure is not limited to these numerals.

Division of the functional blocks in the block diagram is an example, and functional blocks may be realized as a single functional block, a single functional block may be divided into functional blocks, or a function of one functional block may be transferred to another functional block. Functions of functional blocks having similar functions may be processed in parallel or in a time-division manner by single piece of hardware or software.

The order of steps in the flowchart is merely an example for specifically describing the present disclosure, and the steps may be performed in a different order. A step may be performed concurrently (in parallel with) another step.

Various modifications of the embodiment which a person skilled in the art can think of and any combinations of constituent elements and functions in the embodiment are also encompassed within the present disclosure without departing from the spirit of the present disclosure.

### Industrial Applicability

The detection method and the detection apparatus according to the present disclosure can be used as a detection method and a detection apparatus that detect a target substance.

### Reference Signs List

- 100: detection apparatus
- 120: electrode pair
- 130: power source unit
- 140: control unit

## Claims

1. A detection method for detecting a target substance from among in-liquid substances including the target substance and a non-target substance, the detection method comprising:
a first step of applying an alternating-current voltage to an electrode pair that generates an electric field gradient so that positive dielectrophoretic force is exerted on the target substance and the non-target substance; and
a second step of applying an alternating-current voltage after execution of the first step so that negative dielectrophoretic force is exerted on the target substance on which the positive dielectrophoretic force has been acting.

2. The detection method according to claim 1, wherein
in the second step, the negative dielectrophoretic force is generated on the target substance by applying, to the electrode pair, an alternating-current voltage of a frequency different from a frequency of the alternating-current voltage applied in the first step.

3. The detection method according to claim 2, wherein
in the first step, the positive dielectrophoretic force is exerted on the target substance and the non-target substance by applying an alternating-current voltage of a first frequency to the electrode pair; and
in the second step, the negative dielectrophoretic force is exerted on the target substance and the positive dielectrophoretic force is exerted on the non-target substance by applying an alternating-current voltage of a second frequency different from the first frequency to the electrode pair.

4. The detection method according to claim 3, wherein
the second frequency is higher than the first frequency.

5. The detection method according to claim 4, wherein
in the second step, the negative dielectrophoretic force is more strongly exerted on the target substance than the positive dielectrophoretic force acting on the target substance.

6. The detection method according to claim 1, wherein
in the second step, conductivity of a solvent containing the in-liquid substances is increased.

7. The detection method according to any one of claims 1 to 6, further comprising:
a third step of taking an image including the target substance during execution of the second step; and
a fourth step of measuring the target substance included in the image taken in the third step.

8. A detection apparatus for detecting a target substance from among in-liquid substances including the target substance and a non-target substance, the detection apparatus comprising:
an electrode pair that generates an electric field gradient;
a power source unit that applies an alternating-current voltage to the electrode pair; and
a control unit that controls the power source unit to apply the alternating-current voltage to the electrode pair so that a positive electric field region is generated for the target substance and the non-target substance and then apply an alternating-current voltage so that negative dielectrophoretic force is exerted on the target substance on which positive dielectrophoretic force has been acting.
